# EUROPÄISCHE PATENTSCHRIFT

(11) **EP 3 633 250 B1**
(45) Veröffentlichungstag und Bekanntmachung des Hinweises auf die Patenterteilung: **02.03.2022**
(21) Anmeldenummer: 18465587.6
(22) Anmeldetag: 02.10.2018
(51) Int. Cl.: F16K 5/20, F01P 7/14, F16K 11/087, F16K 27/06

(54) **FLUIDVENTIL, FAHRZEUG**
FLUID VALVE, VEHICLE
SOUPAPE À FLUIDE, VÉHICULE

(43) Veröffentlichungstag der Anmeldung: 08.04.2020
(73) Patentinhaber: Vitesco Technologies GmbH, 93055 Regensburg (DE)
(72) Erfinder: Plaeru, George, 300620 Timisoara (RO); Pop, Daniel-Marius, 437315 Suciu de Sus (RO); Popa, Alexandru, 240048 Rimnicu Vilcea (RO); Belin, Cosmin, 300282 Timisoara (RO)
(74) Vertreter: Vitesco Technologies

(56) Entgegenhaltungen:
- AT-B- 322 261
- DE-A1-102013 107 293
- DE-A1-102013 222 157
- DE-A1-102016 005 335
- DE-U1- 8 300 740
- GB-A- 415 810
- US-A- 4 424 825
- US-A1- 2006 005 789
- US-A1- 2006 175 570
- US-A1- 2017 299 070

## Beschreibung

Die vorliegende Erfindung betrifft ein Fluidventil und ein Fahrzeug mit einem Kühlkreislauf oder einen Wärmemittelkreislauf mit dem Fluidventil.

Unter dem Fluidventil wird insbesondere ein Kühlwasserventil verstanden, insbesondere zur Verwendung in dem Fahrzeug.

Unter dem Fahrzeug ist jede Art von Fahrzeug zu verstehen, welches zum Betrieb mit einem flüssigen und/oder gasförmigen Kraftstoff betrieben wird. Darüber hinaus kann es sich bei dem Fahrzeug auch um ein ausschließlich oder teilweise elektrisch betriebenes Fahrzeug handeln. Das Fahrzeug kann insbesondere ein Personenkraftwagen und/oder ein Nutzfahrzeug sein.

Aus der US 2006/005789 A1 ist ein Fluidventil mit den Merkmalen des Oberbegriffes von Patentanspruch 1 bekannt. Weitere Fluidventile dieser Art sind in den Veröffentlichungen DE 83 00 740 U1, AT 322 261 B, DE 10 2016 005 335 A1 und US 2017/299070 A1 beschrieben.

Die vorliegende Erfindung hat die Aufgabe ein Fluidventil bereitzustellen, bei dem ein Leckageverlust reduziert werden soll, resultierend aus einem Überströmen eines aufgestauten Wärmeträgermediums, insbesondere eines Kühlwassers, aus einer durch den Ventilkörper gesperrten Leitung über den Ventilkörper hinweg.

Diese Aufgabe wird bei einem Fluidventil der angegebenen Art durch die kennzeichnenden Merkmale von Patentanspruch 1 gelöst. Es werden ferner eine Verwendung des Fluidventils als Kühlwasserventil (vgl. Anspruch 7), eine Verwendung des Fluidventils als Mischventil (vgl. Anspruch 8) und ein Fahrzeug mit dem Fluidventil (vgl. Anspruch 9) beansprucht. Vorteilhafte Ausführungsformen der Erfindung sind Gegenstand der Unteransprüche.

Die Erfindung betrifft ein Fluidventil mit einem Ventilgehäuse und einem darin angeordneten stellbaren Ventilkörper und mehreren mit dem Ventilgehäuse verbundenen Leitungsenden zum Transport eines Wärmeträgermediums, insbesondere eines Kühlwassers, wobei zwischen dem Ventilkörper und den Leitungsenden mit Spanneinrichtungen gegen den Ventilkörper andrückbare Kammern, in welche die Leitungsenden münden, vorgesehen sind. Die Spanneinrichtungen sorgen folglich dafür, dass ein Übergangsbereich zwischen dem Ventilkörper und den Leitungsenden zuverlässig abgedichtet wird. Auf diese Weise ist die Gefahr eines unerwünschten Überströmens des Wärmeträgermediums aus einer durch den Ventilkörper gesperrten ersten Leitung in mindestens eine durch den Ventilkörper geöffnete zweite Leitung und somit die Gefahr einer unerwünschten Mischung des Wärmeträgermediums aus mehreren Leitungen reduziert.

Erfindungsgemäß sind die als Linearantriebe ausgebildeten Spanneinrichtungen nachstellbar. Somit kann die Andrückkraft ohne Demontage des Fluidventils während des Betriebs nachgestellt werden, beispielsweise, weil die Dichtelement im Laufe der Zeit eine Kriechbewegung ausüben oder wegen betriebsbedingt auftretender Temperaturschwankungen, die thermisch bedingte Längenänderungen zur Folge haben.

Die Linearantriebe eignen sich zum Nachstellen der Spanneinrichtungen gut. Hierbei werden die Spanneinrichtungen automatisch nachgestellt.

Zwischen den Spanneinrichtungen und den Kammern sind Kraftsensoren montiert. Diese können Änderungen der Andrückkräfte, mit denen die Dichtelemente zusammengepresst werden, zwischen den Spanneinrichtungen und den Kammern detektieren. Wenn die Spanneinrichtungen mit den Linearantrieben nachgestellt werden, bilden die Linearantriebe und die Kraftsensoren einen Regelkreis zum automatischen Nachstellen der Andrückkräfte.

Nach einer Ausführungsform können zwischen den Kammern und dem Ventilkörper Dichtelemente angeordnet sein. Die Dichtelemente dienen dazu, die Dichtwirkung zwischen den Kammern und dem Ventilkörper zu optimieren.

Nach einer weiteren Ausführungsform können die Kammern in Wirkrichtung einer Andrückkraft eine länglich ausgebildete Öffnung, in welche die Leitungsenden münden, aufweisen. Die länglich ausgebildete Öffnung ermöglicht den Kammern in Wirkrichtung der Andrückkraft einen Bewegungsspielraum, der erforderlich sein kann, wenn die in die Kammern mündenden Leitungsenden starr sind und die Kammern zum Nachstellen der Andrückkraft oder zum Ausgleich von thermischen Längenänderungen eine Ausgleichsbewegung ausüben müssen. Der Rand der länglich ausgebildeten Öffnungen kann als ein Anschlag dienen, der gegen die in die Kammern mündenden Leitungsenden anschlagen kann. Vorzugsweise sind jedoch die Längen der länglich ausgebildeten Öffnungen größer als der für die Ausgleichsbewegung maximal erforderliche Bewegungsspielraum der Kammern.

Nach einer weiteren Ausführungsform können die Kammern wenigstens teilweise von dem Ventilgehäuse abgedeckt und die Leitungsenden als in die Ventilgehäuse einschraubbare starre Rohrelemente ausgestaltet sein. Das Ventilgehäuse kann die länglich ausgebildeten Öffnungen der Kammern abdecken, so dass die Öffnungen gegenüber der Umgebung des Fluidventils abgedichtet sind. An die Rohrelemente können flexible Schläuche angeschlossen werden.

Nach einer weiteren Ausführungsform können zwischen den Kammern und dem Ventilgehäuse weitere Dichtelemente vorgesehen sein. Mit den weiteren Dichtelementen soll die Dichtwirkung des Fluidventils gegenüber seiner Umgebung verbessert werden.

Nach einer weiteren Ausführungsform können die länglich ausgebildeten Öffnungen quer zur Wirkrichtung der Andrückkraft eine Breite aufweisen, die mindestens so groß ist wie der Außendurchmesser der Rohrelemente. Dadurch existiert für die Kammern auch quer zur Wirkrichtung der Andrückkraft ein bestimmter Bewegungsspielraum, der durch die Breite der länglich ausgebildeten Öffnungen begrenzt ist.

Außerdem wird eine Verwendung des Fluidventils nach einem der Ansprüche 1 bis 6 als Kühlwasserventil eines Kühlwasserkreislaufs vorgeschlagen.

Darüber hinaus wird eine Verwendung eines Fluidventils nach einem der Ansprüche 1 bis 6 als Mischventil eines Wärmemittelkreislaufs vorgeschlagen.

Des Weiteren wird ein Fahrzeug mit einem Kühlmittelkreislauf oder einem Wärmemittelkreislauf, bei dem der Kühlmittelkreislauf oder der Wärmemittelkreislauf mit einem Fluidventil nach einem der Ansprüche 1 bis 6 ausgestattet ist, vorgeschlagen.

Im Weiteren wird die Erfindung unter Bezugnahme auf Figurendarstellungen im Einzelnen erläutert. Aus den Unteransprüchen und der nachfolgend detaillierten Beschreibung einer vorgeschlagenen Ausführungsform ergeben sich weitere vorteilhafte Weiterbildungen der Erfindung. Hierzu zeigen:
- Fig.1: eine perspektivische Draufsicht auf ein Fluidventil, bei dem aus Darstellungsgründen ein sonst abgedeckter Ventilkörper sichtbar ist;
- Fig.2: eine Schnittansicht durch das Fluidventil aus Fig. 1 im Bereich einer Spanneinrichtung und einer Kammer;
- Fig.3: eine weitere Schnittansicht des Bereichs des Fluidventils aus Fig. 2.

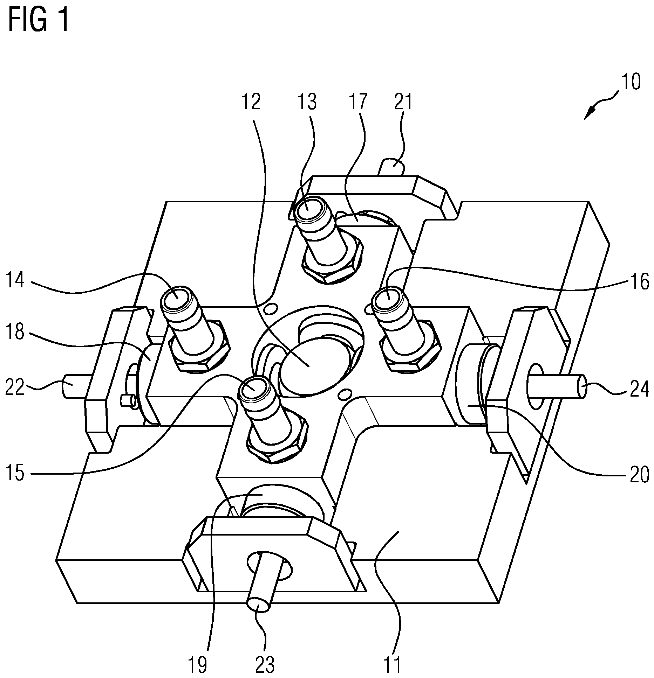

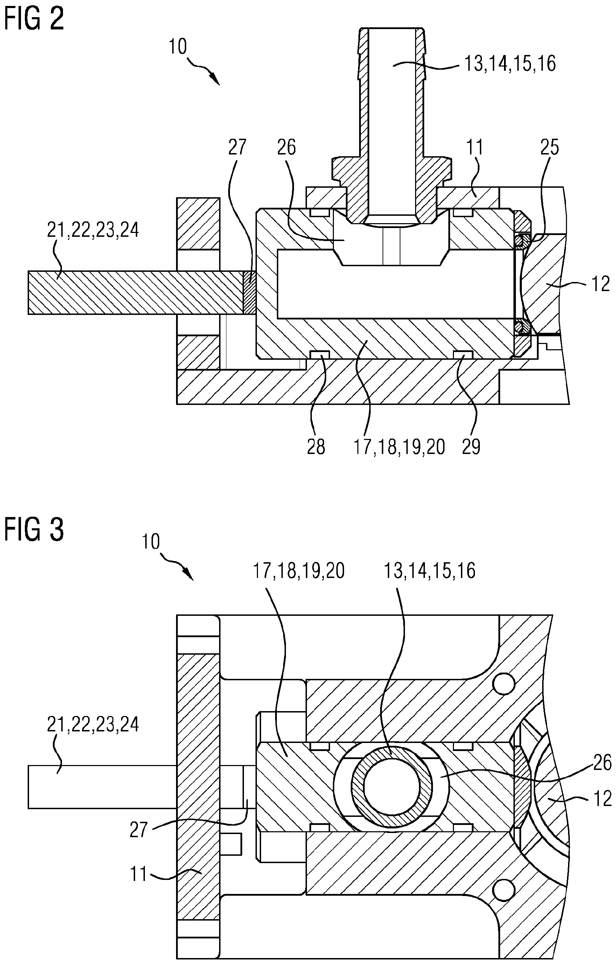

Die Figuren 1 bis 3 zeigen ein Fluidventil 10, welches als ein Verteilerventil oder ein Mischventil betrieben werden kann.

Das Fluidventil 10 weist ein Ventilgehäuse 11 und einen Ventilkörper 12 auf. Es ist mit Leitungsenden 13, 14, 15 und 16 zum Transport eines Wärmeträgermediums, vorzugsweise eines Kühlwassers, verbunden. Die Leitungsenden 13, 14, 15 und 16 sind als starre Rohrelemente ausgestaltet, an deren Enden flexible, hier nicht näher dargestellte Schläuche angeschlossen werden können.

In dem Ventilgehäuse 11 sind Kammern 17, 18, 19 und 20 angeordnet, auf deren Enden Spanneinrichtungen 21, 22, 23 und 24 drücken.

Zwischen den Kammern 17, 18, 19 und 20 und dem Ventilkörper 12 sind Dichtelemente 25 montiert. Die Spanneinrichtungen 21, 22, 23 und 24 drücken die Kammern 17, 18, 19 und 20 gegen die Dichtelemente 25, so dass diese gegen den Ventilkörper 12 gepresst werden. Wenn der Ventilkörper 12 die mit den Rohrelementen 13, 14, 15 und 16 verbundenen Leitungsenden 13, 14, 15 und 16 absperrt, staut sich in den Leitungsenden das Wärmeträgermedium an, so dass auf die Dichtelemente 25 ein anschwellender Druck wirkt. Das Zusammenwirken der Spanneinrichtungen 21, 22, 23 und 24 mit den Kammern 17, 18, 19 und 20 und den Dichtelementen 25 reduziert somit die Gefahr eines unerwünschten Überströmens des Wärmeträgermediums über die Dichtungen 25 hinweg. Folglich wird eine unerwünschte Mischung des Wärmeträgermediums aus einer ersten mit einer zweiten Leitung mit dem Fluidventil 10 wenigstens reduziert.

Die Kammern 17, 18, 19 und 20 weisen eine länglich ausgebildete Öffnung 26 auf, in welche die Leitungsenden 13, 14, 15 und 16 hineinragen. Die länglich ausgebildete Öffnung 26 gestattet den Kammern 17, 18, 19 und 20 somit einen Bewegungsspielraum, um eine Kriechbewegung der Dichtelemente 25 oder thermische Längenänderungen ausgleichen zu können. Der Rand der länglich ausgebildeten Öffnung 26 kann sowohl in Wirkrichtung der Andrückkraft als auch quer dazu als ein Anschlag dienen, um den Bewegungsspielraum der Kammern 17, 18, 19 und 20 zu begrenzen. Zweckmäßigerweise ist jedoch die sich in der Wirkrichtung der Andrückkraft erstreckende Länge der länglich ausgebildeten Öffnung 26 größer als der maximal erforderliche Bewegungsspielraum der Kammern 17, 18, 19 und 20.

Um die Andrückkraft ohne Demontage des Fluidventils 10 im Betrieb nachstellen zu können, sind die Spanneinrichtungen 21, 22, 23 und 24 nachstellbar. Zu diesem Zweck sind die Spanneinrichtungen 21, 22, 23 und 24 als Linearantriebe ausgeführt.

Die als Linearantriebe ausgebildeten Spanneinrichtungen 21, 22, 23 und 24 eignen sich zum automatischen Nachstellen. Zum automatischen Nachstellen sind zwischen den Spanneinrichtungen 21, 22, 23 und 24 und den Kammern 17, 18, 19 und 20 Kraftsensoren 27, welche die Andrückkräfte detektieren, mit denen die Dichtelemente 25 zusammengepresst werden, angeordnet. Die Linearantriebe und die Kraftsensoren bilden dann einen Regelkreis zum automatischen Nachstellen der Andrückkräfte.

Zwischen dem Gehäuse 11 und den Kammern 17, 18, 19 und 20 sind weitere Dichtelemente 28 und 29 montiert. Sie dichten das Fluidventil 10 gegenüber seiner Umgebung ab.

## Patentansprüche

1. Fluidventil (10) mit einem Ventilgehäuse (11) und einem darin angeordneten stellbaren Ventilkörper (12) und mehreren mit dem Ventilgehäuse (11) verbundenen Leitungsenden (13, 14, 15, 16) zum Transport eines Wärmeträgermediums, insbesondere eines Kühlwassers, wobei zwischen dem Ventilkörper (12) und den Leitungsenden (13, 14, 15, 16) mit Spanneinrichtungen (21, 22, 23, 24) gegen den Ventilkörper (12) andrückbare Kammern (17, 18, 19, 20), in welche die Leitungsenden (13, 14, 15, 16) münden, vorgesehen sind, **dadurch gekennzeichnet, dass** die Spanneinrichtungen (21, 22, 23, 24) als während des Betriebes des Fluidventils (10) nachstellbare Linearantriebe ausgebildet sind, dass zwischen den Spanneinrichtungen (21, 22, 23, 24) und den Kammern (17, 18, 19, 20) Kraftsensoren (27) montiert sind und dass die Linearantriebe und die Kraftsensoren (27) einen Regelkreis zum automatischen Nachstellen der Andrückkräfte der Spanneinrichtungen (21, 22, 23, 24) bilden.

2. Fluidventil (10) nach Anspruch 1, **dadurch gekennzeichnet, dass** die Kammern (17, 18, 19, 20) in Richtung einer Andrückkraft länglich ausgebildete Öffnungen (26), in welche die Leitungsenden (13, 14, 15, 16) münden, aufweisen.

3. Fluidventil (10) nach einem der vorhergehenden Ansprüche, **dadurch gekennzeichnet, dass** die Kammern (17, 18, 19, 20) wenigstens teilweise von dem Ventilgehäuse (11) abgedeckt sind und die Leitungsenden (13, 14, 15, 16) als in die Ventilgehäuse (11) einschraubbare starre Rohrelemente ausgestaltet sind.

4. Fluidventil (10) nach Anspruch 3, **dadurch gekennzeichnet, dass** die länglich ausgebildeten Öffnungen (26) quer zur Wirkrichtung der Andrückkraft eine Breite aufweisen, die mindestens so groß ist wie der Außendurchmesser der Rohrelemente (13, 14, 15, 16).

5. Fluidventil (10) nach einem der vorhergehenden Ansprüche, **dadurch gekennzeichnet, dass** zwischen den Kammern (17, 18, 19 und 20) und dem Ventilkörper (12) Dichtelemente (25) angeordnet sind.

6. Fluidventil (10) nach Anspruch 5, **dadurch gekennzeichnet, dass** zwischen den Kammern (17, 18, 19, 20) und dem Ventilgehäuse (11) weitere Dichtelemente (28, 29) vorgesehen sind.

7. Verwendung eines Fluidventils (10) nach einem der Ansprüche 1 bis 6 als Kühlwasserventil eines Kühlwasserkreislaufs.

8. Verwendung eines Fluidventils (10) nach einem der Ansprüche 1 bis 6 als Mischventil eines Wärmemittelkreislaufs.

9. Fahrzeug mit einem Kühlmittelkreislauf oder Wärmemittelkreislauf, **dadurch gekennzeichnet, dass** der Kühlmittelkreislauf oder der Wärmemittelkreislauf mit einem Fluidventil (10) nach einem der Ansprüche 1 bis 6 ausgerüstet ist.

## Claims

1. Fluid valve (10) having a valve housing (11) and having an adjustable valve body (12) which is arranged therein and having multiple line ends (13, 14, 15, 16) which are connected to the valve housing (11) and which serve for transport of a heat-carrier medium, in particular a cooling water, wherein, between the valve body (12) and the line ends (13, 14, 15, 16), provision is made of chambers (17, 18, 19, 20) which can be pressed against the valve body (12) by way of clamping devices (21, 22, 23, 24) and into which the line ends (13, 14, 15, 16) open, **characterized in that** the clamping devices (21, 22, 23, 24) are in the form of linear drives which can be adjusted during the operation of the fluid valve (10), **in that** force sensors (27) are mounted between the clamping devices (21, 22, 23, 24) and the chambers (17, 18, 19, 20), and **in that** the linear drives and the force sensors (27) form a closed-loop control circuit for automatic adjustment of the contact pressure forces of the clamping devices (21, 22, 23, 24) .

2. Fluid valve (10) according to Claim 1, **characterized in that**, in the direction of a contact pressure force, the chambers (17, 18, 19, 20) have elongate openings (26) into which the line ends (13, 14, 15, 16) open.

3. Fluid valve (10) according to either of the preceding claims, **characterized in that** the chambers (17, 18, 19, 20) are covered at least partially by the valve housing (11), and the line ends (13, 14, 15, 16) are in the form of rigid pipe elements which can be screwed into the valve housing (11).

4. Fluid valve (10) according to Claim 3, **characterized in that**, transverse to the direction of action of the contact pressure force, the elongate openings (26) have a width which is at least as large as the outer diameter of the pipe elements (13, 14, 15, 16) .

5. Fluid valve (10) according to one of the preceding claims, **characterized in that** sealing elements (25) are arranged between the chambers (17, 18, 19 and 20) and the valve body (12).

6. Fluid valve (10) according to Claim 5, **characterized in that** further sealing elements (28, 29) are provided between the chambers (17, 18, 19, 20) and the valve housing (11).

7. Use of a fluid valve (10) according to one of Claims 1 to 6 as a cooling-water valve of a cooling-water circuit.

8. Use of a fluid valve (10) according to one of Claims 1 to 6 as a mixing valve of a heat-medium circuit.

9. Vehicle having a coolant circuit or heat-medium circuit, **characterized in that** the coolant circuit or the heat-medium circuit is equipped with a fluid valve (10) according to one of Claims 1 to 6.

## Revendications

1. Soupape à fluide (10) comprenant un boîtier de soupape (11) et un corps de soupape réglable (12) agencé dans celui-ci et plusieurs extrémités de conduites (13, 14, 15, 16) reliées au boîtier de soupape (11) pour le transport d'un milieu caloporteur, en particulier d'une eau de refroidissement, des chambres (17, 18, 19, 20) pouvant être pressées contre le corps de soupape (12) avec des dispositifs de serrage (21, 22, 23, 24), dans lesquelles les extrémités de conduites (13, 14, 15, 16) débouchent, étant prévues entre le corps de soupape (12) et les extrémités de conduites (13, 14, 15, 16), 16), **caractérisée en ce que** les dispositifs de serrage (21, 22, 23, 24) sont configurés sous forme d'entraînements linaires ajustables pendant le fonctionnement de la soupape à fluide (10), **en ce que** des capteurs de force (27) sont montés entre les dispositifs de serrage (21, 22, 23, 24) et les chambres (17, 18, 19, 20), et **en ce que** les entraînements linaires et les capteurs de force (27) forment un circuit de régulation pour l'ajustement automatique des forces de pression des dispositifs de serrage (21, 22, 23, 24).

2. Soupape à fluide (10) selon la revendication 1, **caractérisée en ce que** les chambres (17, 18, 19, 20) présentent des ouvertures (26) configurées sous forme allongée en direction d'une force de pression, dans lesquelles débouchent les extrémités de conduites (13, 14, 15, 16) .

3. Soupape à fluide (10) selon l'une quelconque des revendications précédentes, **caractérisée en ce que** les chambres (17, 18, 19, 20) sont au moins partiellement recouvertes par le boîtier de soupape (11), et les extrémités de conduites (13, 14, 15, 16) sont conçues sous forme d'éléments tubulaires rigides pouvant être vissés dans le boîtier de soupape (11).

4. Soupape à fluide (10) selon la revendication 3, **caractérisée en ce que** les ouvertures (26) configurées sous forme allongée présentent, transversalement à la direction d'action de la force de pression, une largeur qui est au moins aussi grande que le diamètre extérieur des éléments tubulaires (13, 14, 15, 16).

5. Soupape à fluide (10) selon l'une quelconque des revendications précédentes, **caractérisée en ce que** des éléments d'étanchéité (25) sont agencés entre les chambres (17, 18, 19 et 20) et le corps de soupape (12) .

6. Soupape à fluide (10) selon la revendication 5, **caractérisée en ce que** des éléments d'étanchéité supplémentaires (28, 29) sont prévus entre les chambres (17, 18, 19, 20) et le boîtier de soupape (11).

7. Utilisation d'une soupape à fluide (10) selon l'une quelconque des revendications 1 à 6 en tant que soupape d'eau de refroidissement d'un circuit d'eau de refroidissement.

8. Utilisation d'une soupape à fluide (10) selon l'une quelconque des revendications 1 à 6 en tant que soupape de mélange d'un circuit de milieu chauffant.

9. Véhicule comprenant un circuit de milieu réfrigérant ou un circuit de milieu chauffant, **caractérisé en ce que** le circuit de milieu réfrigérant ou le circuit de milieu chauffant est équipé d'une soupape à fluide (10) selon l'une quelconque des revendications 1 à 6.
